# EUROPÄISCHE PATENTSCHRIFT

(11) **EP 0 394 533 B1**
(45) Veröffentlichungstag und Bekanntmachung des Hinweises auf die Patenterteilung: **29.09.1993**
(21) Anmeldenummer: 89107680.4
(22) Anmeldetag: 27.04.1989
(51) Int. Cl.: B23Q 5/16

(54) **Antriebsanordnung für Werkzeugmaschinen mit einer Spindel**
Spindle drive arrangement for a machine tool
Disposition de l'entraînement d'une broche d'une machine-outil

(43) Veröffentlichungstag der Anmeldung: 31.10.1990
(73) Patentinhaber: ALZMETALL WERKZEUGMASCHINENFABRIK UND GIESSEREI FRIEDRICH GMBH & CO., D-83352 Altenmarkt (DE)
(72) Erfinder: Schnell, Burkhard K., Dipl.-Ing., D-8223 Trostberg (DE); Probst, Ludwig, Dipl.-Ing. (FH), D-8220 Traunstein (DE)
(74) Vertreter: Pfenning, Meinig & Partner

(56) Entgegenhaltungen:
- EP-A- 0 247 204
- EP-A- 0 311 703
- DE-A- 3 420 564
- FR-A- 2 517 237
- US-A- 2 489 725
- US-A- 2 666 332
- US-A- 4 209 273

## Beschreibung

Antriebssysteme für Werkzeugmaschinen der hier interessierenden Art kennzeichnen sich im wesentlichen durch einen Hauptantriebsmotor, beispielsweise einen Drehstrommotor, dessen ausgangsseitiges Drehmoment für den Bearbeitungsvorgang eines Werkstückes mittels eines Werkzeuges, wie beispielsweise eines Bohrers, stufenlos (mittels geeigneter Getriebeanordnungen) veränderbar sein muß. Für Säulenbohrmaschinen ist es in diesem Zusammenhang bekannt, einen stufenlosen Keilriemenregeltrieb einzusetzen, der aus mehreren Kegelscneibensätzen besteht, deren einzelne Kegelscheiben so gegeneinander verstellbar sind, daß der zwischen diesen geführte Keilriemen mit unterschledlichen Umfangsgeschwindigkeiten auf den verschiedenen Kegelscneibensätzen umlaufen kann, was zu der abtriebsseitigen stufenlosen Veränderung der Drehzahl führt. Die stufenlose Einstellung der Kegelscheibensätze wird hiermit manuell mittels eines Hebelsystems vorgenommen. Nur bei großen Bohrzentren ist eine, dann aber entsprechend aufwendige automatische Regelung möglich. Es gehört darüber hinaus zum Stand der Technik, dem Keilriemenregeltrieb über ein Vorgelege ein mehrstufiges Schaltgetriebe nachzuschalten, um die mögliche Variationsbreite der Drehzahl der Spindel der Werkzeugmaschine möglichst groß halten zu können.

Desweiteren sind Antriebsanordnungen für Werkzeugmaschinen der hier interessierenden Art bekannt, die mit stufenlos regelbaren Gleich-Wechselstrommotoren ausgerüstet sind.

So ist beispielsweise in der US 2,489,725 eine Antriebsanordnung mit einer Spindeldrehzahlsteuerung inbesondere für Fräsmaschinen nach dem Oberbegriff des Patentanspruchs 1 beschrieben.

Die Drehzahl wird mittels eines Doppelwinkelhebels, der gleichzeitig an zwei Kegelscheiben zweier gekoppelter Regelscheibensätze angreift, mit einem Steuermotor geregelt.

Für die Vorschubbewegung der Werkzeugmaschinenspindel bei Verwendung einer Pinole sind nach dem Stand der Technik für Säulenbohrmaschinen drei unterschiedliche Möglichkeiten gegeben. Für Bohrmaschinen, die kleinere Vorschubkräfte und relativ ungenaue Vorschubgeschwindigkeiten erfordern, sind Vorrichtungen mit Handvorschub üblich. Dabei wird eine verzahnte Pinole über ein Ritzel, eine Vorschubwelle und ein Griffkreuz oder einen Hebel von Hand nach unten getrieben.

Bei Maschinen, die höhere Vorschubkräfte oder genauere Vorschubgeschwindigkeiten erfordern, wird die Vorschubwelle entweder von einem Vorschubgetriebe, das seine Drehzahlen und Drehmomente vom Hauptantrieb für die Spindel abzweigt und dabei durch Wechselräder oder Schaltstufen in beschränktem Maße unterschiedliche Vorschubgeschwindigkeiten zuläßt, die in einem bestimmten erforderlichen Verhältnis zur Hauptspindeldrehzahl stehen, angetrieben, oder von einem separaten Vorschub-Motor, der eine Vielzahl unterschiedlicher Vorschubgeschwindigkeiten zuläßt, wenn der Antrieb stufenlos regelbar sein soll.

Für die Begrenzungen des Vorschubweges sind entweder von Hand verstellbare Festanschläge bekannt oder Steuerungen üblich, die ein Wegsignal, das ein eingebautes Wegmeßsystem erfordert, auswertet und den Vorschubantrieb entsprechend steuert.

Die vorliegende Erfindung beschäftigt sich mit Verbesserungen an der Gesamtantriebsanordnung und es liegt ihr entsprechend die Aufgabe zugrunde, die Funktionsweise einer solchen Antriebsanordnung zu erhöhen und das Einsatzfeld für die Werkstückbearbeitung zu vergrößern bei gleichzeitiger Minimierung des hierfür erforderlichen Platzbedarfes und der sie bildenden Einzelteile zwischen Motorantrieb und abtriebsseitiger Spindelbetätigung.

Die Lösung dieser Aufgabe wird erfindungsgemäß durch die in Patentanspruch 1 angegebenen Merkmale erreicht, wobei aus den Unteransprüchen vorteilhafte Ausgestaltungen und Weiterbildungen dieser Aufgabenlösung hervorgehen.

Es ist vorteilhaft, daß der erfindungsgemäß ausgebildete stufenlose Keilriemenregeltrieb nur aus zwei Kegelscheibensätzen besteht, deren Regelung über einen Servostellmotor, der in besonders raumsparender Weise zwischen den beiden Kegelscheibensätzen in der Weise angeordnet ist, daß sein abtriebsseitiges Ritzel etwa in Höhe einer Glocke liegt, die die Verstellbarkeit des einen Kegelscheibensatzes vorgibt. Das von dem Servostellmotor hierfür aufzuwendende Drehmoment, kann in vorteilhafter Weise dadurch besonders gering gehalten werden und damit der Servostellmotor selbst in Kleinstbauweise ausgeführt sein, daß das Drehmoment von einem Antriebsriemen auf die äußere Umfangsfläche der Glocke übertragen wird, die ihrerseits mit einer Gewindespindel in Wirkverbindung steht, die das Heben und Senken, bzw. Entfernen und sich Annähern, der einen Kegelscheibe an die zugehörige zweite Kegelscheibe eines Kegelscheibensatzes sicherstellt. Die Anbringung des relativ kleinen Servostellmotors zwischen den beiden Kegelscheibensätzen verringert die Bauhöhe gegenüber bekannten Ausführungsformen, bei denen die Stellmotore in axialer Verlängerung des einen oder anderen Kegelscheibensatzes angeordnet sind. Die Verwendung solcher Stellmotoren ist jedoch in Verbindung mit Säulenbohrmaschinen, wie sie hier für die vorliegende Aufgabenlösung zu betrachten sind, nicht Stand der Technik.

Besonders vorteilhaft ist die vorliegende Antriebsanordnung im Zusammenhang mit dem mehrstufigen Schaltgetriebe, welches eine Getriebekupplung minimierter Bauhöhe aufweist.

Die geringe Bauhöhe der Getriebekupplung wird in vorteilhafter Weise insbesondere dadurch ermöglicht, daß nur eine Kupplungshälfte als Elektromagnetkupplung ausgebildet ist, während die zweite Kupplungshälfte ohne Elektromagnet und den damit verbundenen Spulenkörper auskommt. Hierbei ist es wahlweise möglich, für die zweite Kupplungshälfte zur Vorgabe des den Reibschluß zwischen den Kupplungshälften vorgebenden axialen Verschiebungsweg entweder mit einer Teller-Feder auszurüsten, oder mit einer Permanentmagnetscheibe. Beide Ausführungen sind in ihrer Funktionsweise äquivalent. Ihr Aufbau ist gleichermaßen einfach und störungsunanfällig. Schließlich ist noch eine Ausführungsform vorteilhaft, die mit einer bistabilen Tellerfeder versehen ist und als rein mechanisch/manuelle Lösung eine vereinfachte Alternative bietet.

Vorteilhaft ist es auch, die Ankerscheibe einer solchen Kupplung für die Erfassung der Hauptspindeldrehzahl zu benutzen, indem entlang ihrer äußeren Umfangsfläche beispielsweise eine Verzahnung vorgesehen wird, die berührungslos abgetastet wird, so daß sich über die damit gewonnene Impulsfolge digitale Werte anzeigen lassen. Die Drehzahl der Spindel der erfindungsgemäß ausgebildeten Werkzeugmaschine kann in einem bevorzugten Ausführungsbeispiel von 50 bis 5000 Umdrehungen pro Minute variiert werden und der Vorschub des Werkzeuges wird unabhängig von der Drehzahl in absoluten bzw. relativen Werten vorgegeben bzw. angezeigt.

Es ist weiterhin besonders vorteilhaft, daß die Pinole mit Vorschubantrieben verschiedener Art ausgestattet werden kann, die dem hohen Anspruch des Hauptantriebs entsprechend gerecht werden.

Dabei ist es bei einem Handvorschubantrieb mit Griffkreuz besonders vorteilhaft, daß die Vorschubwelle über eine einschaltbare Haltebremse von einer Steuerung bei Erreichen einer voreingestellten Bohrtiefe blockiert werden kann.

Eine höhere Ausstattungsstufe stellt der Vorschubantrieb mit Motor- und Getriebeanordnung dar, der bei einer hohen Vorschubkraft eine hohe Positioniergenauigkeit hat. Dies wird insbesondere dadurch möglich, daß ein Kugelgewindetrieb eingesetzt wird, der in einem sehr geringen Abstand parallel zur Pinole angeordnet ist und durch eine Steuerung und einen entsprechend stufenlos verstellbaren Motor, wie z.B. einen Schrittmotor in Geschwindigkeit und Länge des Verfahr weges exakt steuerbar ist.

Die Vorschubanordnung wird durch eine weitere Variante für den Maschinenbediener besonders vorteilhaft dadurch, daß er den Handantrieb, wie er in der Regel durch Griffkreuz und verzahnte Vorschubwelle und verzahnte Pinole ausgeführt ist, auch kombiniert mit dem stufenlos verstellbaren Vorschubantrieb, wie er in dem Ausführungsbeispiel mit Kugelgewindetrieb und Schrittmotor ausgestattet ist, nutzen kann. Dies wird dadurch ermöglicht, daß das Griffkreuz oder ein Handhebel nach Art eines Servohebels die Pinole parallel zum motorischen stufenlosen Antrieb mit antreiben kann, wobei an einem der Übertragungsglieder ein Sensor untergebracht ist, mit dessen Hilfe die Handkraft gemessen werden kann und diese Kraft von einem Rechner so verarbeitet wird, daß der Antrieb eine dieser Kraft proportionale Geschwindigkeit nachfährt. Vorteilhaft ist hier insbesondere, daß die Hand am Vorschubhebel lediglich die Vorschubgeschwindigkeit der Pinole beeinflußt, daß die erforderliche Vorschubkraft jedoch nicht von der Bedienungsperson aufgebracht werden muß.

Ein weiterer Vorteil der Anordnung wird durch einen Tastknopf erzeugt, mit dessen Hilfe der Vorschubhebel auch zur Programmierung von Umschaltpunkten dienen kann, die über die Steuerung den Vorschubantrieb bei der Wiederholung eines Bearbeitungsvorgangs automatisch dazu veranlaßt, vom Eilgang in die Bearbeitungsvorschubgeschwindigkeit umzuschalten und/oder an einem weiteren Punkt den Bearbeitungsvorgang abzubrechen und die Pinole zurückzuführen in ihre Ausgangsstellung.

Vorteilhaft ist außerdem die Anordnung aller für die Antriebsanordnung zusätzlich erforderlichen Elemente, wie z.B. die Unterbringung des Rechners, des Bedienungspanels , aller elektrotechnischen Bauelemente in einer gemeinsamen innentragenden Platinenstruktur. Für die Steifigkeit dieser Platinenstruktur ist es besonders günstig, daß der Querschnitt wenigstens in Teilbereichen dem Profil eines Doppel-T-Trägers annähernd entspricht.

Die Steuerung von Werkzeugmaschinen, wie hier von Säulenbohrmaschinen, mit einem Hauptantriebsmotor, der entweder in seiner Drehzahl stufenlos verstellbar ist oder mit einem stufenlosen Getriebe ergänzt ist, sowie einem stufenlos verstellbaren Vorschubantrieb für die die Spindel aufnehmende Pinole ist erfindungsgemäß auch deshalb besonders vorteilhaft, weil über ein Bedienungspanel dem eingebauten Rechner vom Maschinenbediener das zu bearbeitende Material, das verwendete Bearbeitungsverfahren, z.B. durch Angabe der Werkzeugart, eine für das Verfahren wichtige geometrische Größe, z.B. durch Eingabe des Bohrungsdurchmessers und Lage und Länge der Werkstückbearbeitung in Bewegungsrichtung der Pinole ohne hohe Anforderungen an das Fachwissen des Personals eingegeben werden kann. Aus den eingegebenen Daten und dem vom Maschinenhersteller hinterlegten technologischen Daten der einzelnen Materialien und Bearbeitungsverfahren und der dazu gehörenden Algorithmen gibt der Rechner von sich aus die optimale Drehzahl der Hauptspindel und die optimale Vorschubgeschwindigkeit der Pinole vor, d.h. er ermittelt und die für die Maschine vorgesehenen Daten, etwa für den stufenlosen Hauptantrieb und den stufenlosen Vorschubantrieb selbsttätig und stellt diese entsprechend ein.

Die vorliegende Erfindung soll anhand der beiliegenden Zeichnungen weiter erläutert werden. Es zeigen:
- Fig. 1: eine seitliche Darstellung der Antriebsanordnung mit Hauptantriebsmotor, stufenlosem Keilriemenregeltrieb, Vorgelege und zweistufigem Schaltgetriebe,
- Fig. 2: eine Teildarstellung von Fig. 1 den stufenlosen Keilriemenregeltrieb betreffend,
- Fig. 4: eine schematische Schnittdarstellung durch die Getriebekupplung des zweistufigen Schaltgetriebes unter Verwendung einer Tellerfeder,
- Fig. 5: eine Darstellung gemäß Fig. 4 für eine andere Ausführungsvariante unter Verwendung eines Permanentmagneten,
- Fig. 6: einen senkrechten mittleren Längsschnitt durch den kompletten Bohrkopf und
- Fig. 7 und 7a: einen waagerechten Schnitt durch den Bohrkopf gemäß Fig. 6,
- Fig. 8: eine Darstellung der Vorschubhebelwirkung in einer Seitenansicht und einer Aufsicht mit Biegebalken und Meßstrecke,
- Fig. 9: eine Seitenansicht der Vorschubeinrichtung für die Pinole, teilweise im Schnitt
- Fig. 10: eine Seitenansicht eines mechanischen Tiefenanschlags im Schnitt.

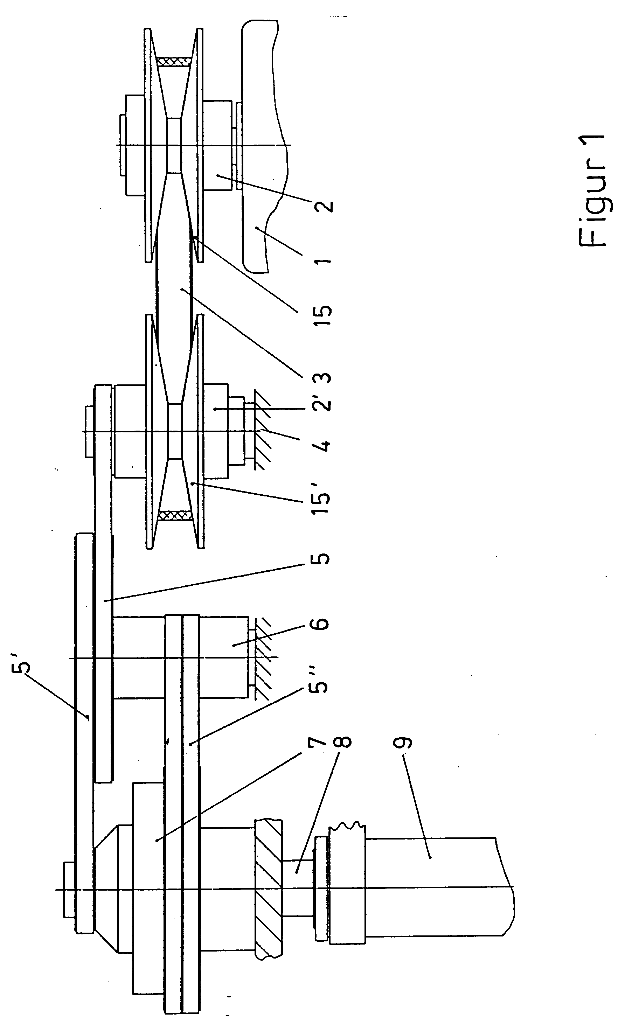

In Fig. 1 ist eine Antriebsanordnung für Werkzeugmaschinen mit einer Spindel, hier der Maschinenkopf einer Säulenbohrmaschine dargestellt, mit dem an dem nur angedeuteten Maschinenkopfgehäuse 4 angeflanschten Hauptantriebsmotor 1, der ausgangsseitig sein Drehmoment über einen stufenlosen Keilriemen-Regeltrieb 2, 2′, 3 bestehend aus zwei Regelriemenscheiben 2, 2′ und einem Breitkeilriemen 3 auf ein zweistufiges Schaltgetriebe überträgt, über das eine Drehspindel 8 angetrieben wird. Der Hauptmotor ist ein Drehstrommotor. Die Betätigung des Vorschubes der Pinole 9 der Spindel 8 erfolgt über einen Vorschubantrieb, auf den später noch näher zurückgekommen wird. Die Übertragung des Antriebes für die Bohrspindel 8 von dem zweistufigen Schaltgetriebe erfolgt über eine Getriebekupplung 7. Diese ist als zweistufige Kupplung ausgebildet, wobei der Riementrieb 5 vom Regeltrieb 2, 2′, 3 über ein Vorgelege 6, über den Riementrieb 5′, den doppelten Riemen 5˝ auf die Kupplung 7 übertragen wird. Das Maschinenkopfgehäuse stellt eine innentragende Platine dar, mit einer mittigen, senkrechten Stützwand und in waagerechter Richtung dazu verlaufenden oberen und unteren Abschlußplatten, so daß sich im Querschnitt etwa eine Doppel-T-Struktur ergibt. Die vom Maschinenkopf aufzunehmenden Komponenten sind innerhalb dieser Gehäusestruktur untergebracht, mit Ausnahme des Hauptantriebsmotors, der rückwärtig angeflanscht ist. Die genannte Antriebsanordnung ist auf die obere Abschlußplatte des Gehäuses 4 aufgesetzt und in dieser gelagert. Abtriebsseitig befindet sich zwischen der Kupplung 7 und der Spindel 8 eine Mitnehmermülse 29.

Der stufenlose Breitkeilriemen-Regeltrieb 3 mit den beiden Kegelscheiben 2, 2′ ermöglichen eine stufenlose Verstellung der Drehzahl der Ausgangswelle des Hauptantriebsmotors 1 infolge der axialen Verschiebbarkeit jeweils einer der Kegelscheiben um einen Faktor 10. Der Kegelscheibensatz 2 ist auf der Ausgangswelle des Motors 1 gelagert. Der Kegelscheibensatz 2′ ist von einer Welle aufgenommen, die ihrerseits in der oberen Maschinenkopfplatte des Gehäuses 4 drehfest gelagert ist. Die Verstellung der axial verschiebbar gelagerten Kegelscheiben, wenigstens eines der Kegelscheibensätze, kann manuell oder mittels Motorbetätigung vorgenommen werden.

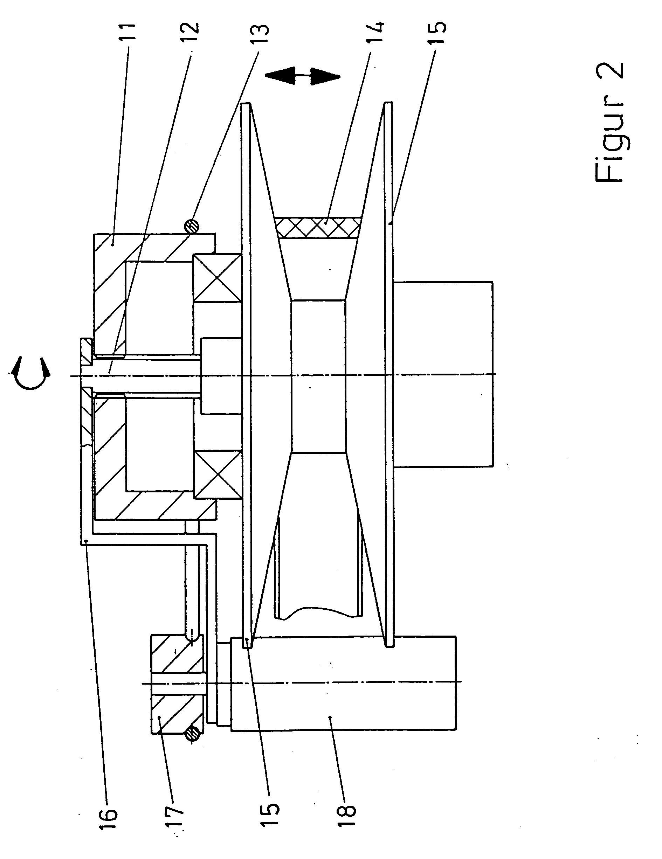

Im Ausführungsbeispiel nach Fig. 2 ist eine Servomotorbetätigung für eine Regelscheibe 15 gezeigt, die beispielsweise die Regelriemenscheibe 15 des Kegelscheibensatzes 2, 2′, 3 darstellt. Bei dieser wird die obere Kegelscheibe wie folgt mittels Motorbetätigung gegen die untere, axial feststehende Kegelscheibe axial angehoben bzw. abgesenkt und damit die Spaltbreite verändert. Wie dargestellt, wirkt die obere Scheibe des Riemenscheibensatzes mit einer Gewindespindel 12, die eine feststehende Trägergewindespindel ist, derart zusammen, daß die obere Scheibe auf der Motorwelle des Hauptantriebsmotors 1 von einer drehbaren Glocke 11 axial verschoben werden kann, während die Motorachse zusammen mit der unteren Riemenscheibe axial fest ist. Die Gewindespindel 12 ist über den Bügel 16 gegen Verdrehung gesichert, die Glocke 11 wird entlang ihrer äußeren Umfangsfläche über einen Antriebsriemen in Form eines Rundschnurriemens 13 von einem Servo-Stellmotor 18 gegen die Gewindespindel 12 gedreht. Der beispielsweise als Servogleichstrommotor ausgelegte Motor 18 ist hierfür zwischen den beiden Kegelscheibensätzen 15, 15′ bzw. Regeltriebe 2, 2′ in der in Fig. 2 gezeigten Art am Maschinenkopfgehäuse 4, etwa mittels nicht dargestellter Schraubenverbindung befestigt. Das Ausgangsrad als Verstellrad 17 des Motors 18 liegt horizontal fluchtend zur Umfangsfläche der Glocke 11 nur wenig oberhalb der Kegelscheibensätze, was zu einer maximalen Platzersparnis für die Anordnung und einer minimalen Bauhöhe innerhalb des Maschinenkopfes führt.

Die Gewindespindel 12 ist unmittelbar oberhalb des stirnseitigen Endes der Glocke 11 mittels der Verdrehsicherung 16, in Form eines Haltebügels an dem Gehäuse oder Stativ des Stellmotors 18 befestigt, so daß sich die Gewindespindel 12 in der dargestellten Ausführungsform nicht drehen kann. Die Glocke 11 wird somit aufgrund ihrer eigenen Drehung mittels des Rundschnurriemens 13 je nach Drehrichtung aufwärts oder abwärts bewegt, zusammen mit der oberen Kegelscheibe des Regelscheibensatzes 15 und sorgt somit für die Vergrößerung oder Verkleinerung des V-förmigen Schlitzes zwischen den beiden Kegelscheiben und damit für die stufenlose Vorgabe des Drehumfanges, also letztlich der Drehgeschwindigkeit, die mittels des Breitkeilriemens 14, von dem Kegelscheibensatz 2 auf den Kegelscheibensatz 2′ übertragen wird. Der Breitriemen 14 entspricht in der Darstellung von Fig. 1 dem Keilriemen 3. Die Zusammen- und Auseinanderbewegung der Kegelscheiben des Regelscheibensatzes 15 ist durch einen Doppelpfeil angedeutet.

Die Ansteuerung des Servostellmotors 18 kann einmal so erfolgen, daß für jede Drehrichtung ein Tastschalter oder dergleichen am Bedienungsfeld der Werkzeugmaschine vorgegeben wird, es ist jedoch auch möglich, diese etwa bei einer NC-gesteuerten Maschine mittels einer Programmsteuerung zu bewerkstelligen. Dadurch, daß bei der vorgeschriebenen Anordnung das Drehmoment des Stellmotors 18 über einen Rundriemen 13 oder dergleichen auf die äußere Umfangsfläche, einer im Durchmesser relativ groß bemessenen Glocke 11 von ausreichender Höhe gegeben wird, ergibt sich eine starke Untersetzung vom Stellmotor auf die Glocke bei festgehaltener Spindel, so daß ein Stellmotor mit nur geringem Durchmesser verwendet werden kann. Die Nachstellung des Abstandes der beiden Kegelscheiben des Kegelscheibensatzes 2′ entgegengesetzt zu der über den Stellmotor vorgegebenen Einstellung erfolgt in bekannter Weise durch Federbeaufschlagung einer Kegelscheibe des Kegelscheibensatzes.

Die Bewegung des Keilriemens 14, d.h. im Ausführungsbeispiel nach Fig. 1 des Breitkeilriemens 3 wird, wie dort dargestellt, mittels Riemenantriebes auf die größere Riemenscheibe des Vorgeleges 6 übertragen, das einerseits über letztgenannte größere Riemenscheibe mit der Riemenscheibe einer Stufe des zweistufigen Schaltgetriebes in Verbindung steht, und andererseits über eine im Durchmesser kleinere Riemenscheibe mit einer größeren Riemenscheibe der anderen Stufe dieses zweistufigen Schaltgetriebes. Die Welle des Vorgeleges 6 ist einseitig in dem als innentragende Platte dienenden Maschinenkopfgehäuses 4 gelagert. An dieser Stelle soll darauf hingewiesen werden, daß Fig. 1 die in Fig. 2 beschriebene Servomotorsteuerung mit der Glocke 11 aus Gründen einer übersichtlicheren Darstellung nicht enthält.

Das Hauptspindel-Vorgelege 6 kann vom zweiten Kegelscheibensatz 15′ über eine Poly-V-Riemen oder einen Flachriemen angetrieben werden und seine Drehgeschwindigkeit in zwei unterschiedlichen Stufen auf das Schaltgetriebe übertragen. Die Übertragung der Drehgeschwindigkeit des Vorgeleges auf die Spindel 8 erfolgt über den Poly-V-Riemen auf die eine Stufe des zweistufigen Schaltgetriebes so, daß die Drehzahl der Welle des Vorgeleges multipliziert mit etwa 3 1/3 der Drehzahl der Welle des Schaltgetriebes in der Stufe 2 entspricht. Die Übertragung der Drehzahl der Welle des Vorgeleges 6 geteilt durch ca. 3 1/4 entspricht der Übertragung der Drehzahl der ersten Stufe des Schaltgetriebes über die Doppelriemenanordnung 5. Bei dem vorgenannten Faktor 10 der über die beiden Kegelscheibensätze 2 und 2′ hinsichtlich der Ausgangsdrehzahl des Hauptantriebsmotors 1 vorgegeben ist, ergibt sich im Ausführungsbeispiel für die erste Stufe eine minimale Umdrehung der Spindel 9 von etwa 50 Umdrehungen pro Minute und eine maximale Umdrehung von 500 Umdrehungen pro Minute und in der zweiten Stufe eine minimale Drehzahl von 500 Umdrehungen bis zu maximal 5000 Umdrehungen pro Minute. Wesentlich für dieses Getriebe ist somit die kontinuierliche Anpassungsmöglichkeit der Drehzahl um den Faktor 100 und damit eine optimale Anpassung des Drehmomentes in weiten Grenzen, wobei das Drehmoment umgekehrt proportional zu der vorgewählten Drehzahl ist.

Durch die Wahl eines anderen Übersetzungsverhältnisses der Stufe 5 können auch andere Drehzahlbereiche als der Bereich 50 bis 5000 verwirklicht werden. Innerhalb des durch die vorgewählte Anordnung vorgegebenen Faktors 100 kann jede Drehzahl von 50 bis 5000 Umdrehungen pro Minute kontinuierlich manuell oder auch NC-gesteuert vorgegeben werden. Das erforderliche Spannen der Riemen zwischen den Achsen kann in bekannter Weise dadurch erfolgen, daß die Achsen bzw. ihre zugehörigen Wellen auf dem Maschinenkopfgehäuse über nicht dargestellte Exzenter gelagert sind, die die hierfür erforderliche Achsabstandsverstellung zwecks Riemenvorspannung ermöglichen. Für eine Minimierung der Lagerhaltung hinsichtlich der Ersatzteile ist es vorteilhaft, gleiche Riemen in Anwendung zu bringen.

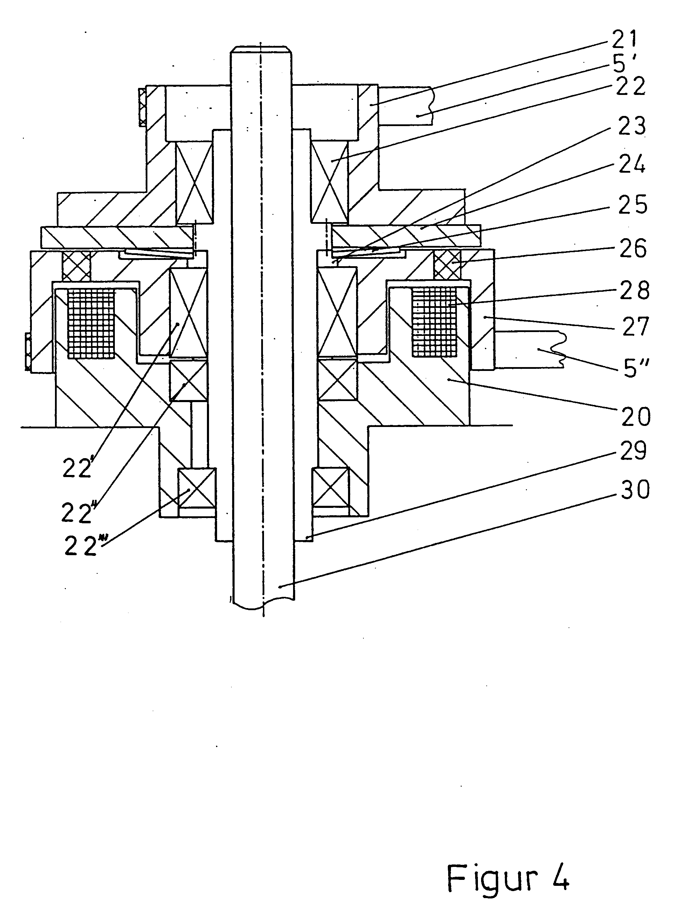

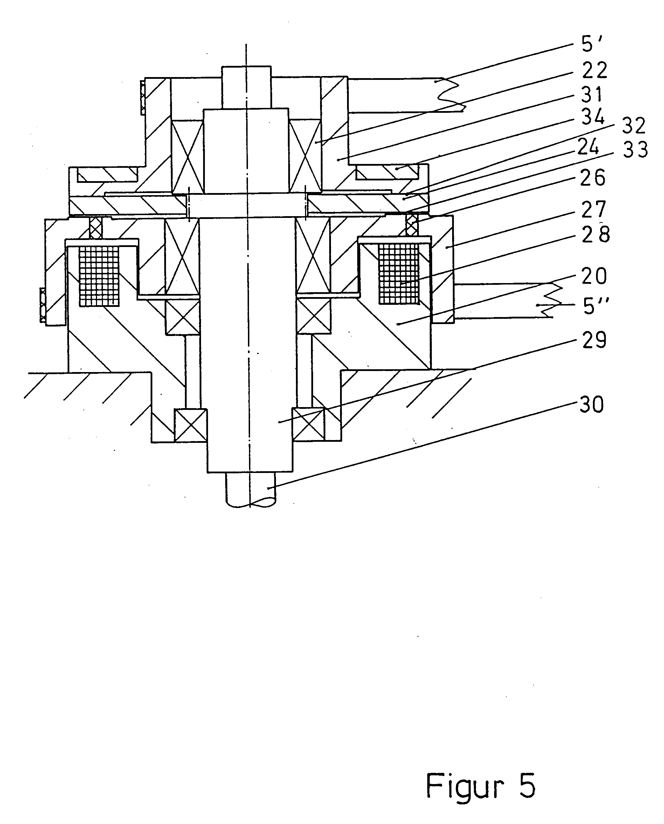

Die in Fig. 1 links nur schematisch dargestellte zweistufige Kupplung 7 ist in den Schnittdarstellungen von Fig. 4 und 5 in zwei Ausführungsformen nochmals durchgehend im Schnitt wiedergegeben. Danach sind zwei Ausführungsformen für die zweistufige Schaltkupplung vorgesehen. In beiden Ausführungsformen besteht die eine Kupplungshälfte aus einem die Kupplung betätigenden Elektromagneten. Die zweite Kupplungshälfte wird bei der einen Variation von einem Dauermagneten bzw. einem Weicheisenkern gebildet und in der zweiten Variation von einer mittels einer Tellerfeder vorgespannten Kupplungsscheibe aus nicht magnetischem Eisen.

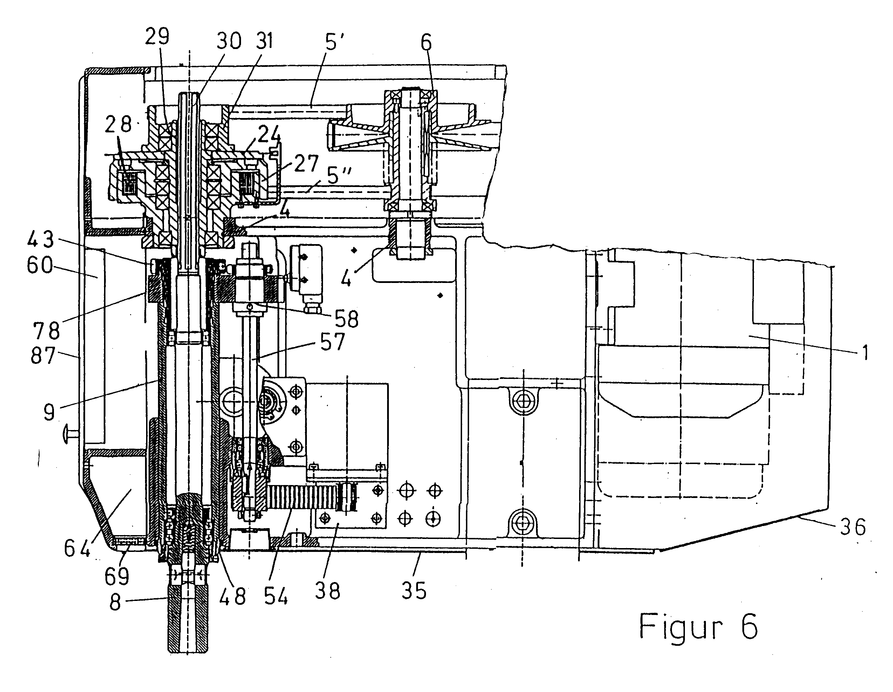

Gemäß Ausführungsform nach Fig. 4 besteht die zweistufige Kupplung 7 aus einer Ankerscheibe 24, die auf das Außenprofil einer Mitnehmerhülse 29 aufgesetzt ist, die ihrerseits die Vielkeilwelle 30, der Spindel 8 (Fig. 6) aufnimmt. Die andere Kupplungshälfte wird von der Kupplungsscheibe 27 vorgegeben, die in der dargestellten Weise den Elektromagneten 28 aufnimmt, der ringförmig ausgebildet innerhalb des Magnetkörpers 20 vorgesehen ist.

Wenn der Elektromagnet 28 stromlos ist, spannt eine Tellerfeder 25 die Ankerscheibe 24 so vor, daß sie in Friktionseingriff mit der Riemenscheibe 21 steht, die über den Riemen 5′, vom Hauptantriebsmotor über das Vorgelege (Fig. 1) angetrieben wird. Hierfür ist die Riemenscheibe 21 auf dem Lager 22 und damit auf der Mitnehmerhülse 29 gelagert. Die Tellerfeder 25 ist ihrerseits in der dargestellten Weise zwischen der Ankerscheibe 24 und der Kupplungsscheibe 27 an einem Stützring 23 gehalten und hält die Ankerscheibe 24 und die Kupplungsscheibe 27 außer Eingriff wie in Fig. 4 dargestellt. In den Magnetkörper 20 ist in Form eines Ringkörpers eine magnetische Störstelle 26 eingelassen.

Wenn der Elektromagnet 28 erregt wird, wird unter Überwindung der Kraft der Tellerfeder 25 die Riemenscheibe 21 außer Eingriff mit der Ankerscheibe 24 gebracht, die in diesem Schaltzustand dann in Mitnehmereingriff mit dem Magnetkörper 20 steht, so daß der Antrieb der Vielkeilwelle 30 nunmehr über den Doppelriemen 5˝ erfolgt, also vom Vorgelege 6 mit der verringerten Drehzahl in der zweiten Stufe der Getriebekupplung. Lager 22′, 22˝, 22‴ sind entsprechend dem Lager 22 für die Kupplungsscheibe 27 und den Magnetkörper 20, wie in Fig. 4 dargestellt, auf die äußere Umfangsfläche der Mitnehmerhülse 29 aufgepaßt. Diese Lager sind vorzugsweise Wälzlager. Es kann vorteilhaft sein, den radial äußeren Ringbereich der Stirnfläche der Riemenscheibe 21, die in der einen Kupplungsstufe mit der gegenüberliegenden Stirnfläche der Ankerscheibe 24 in Eingriff gelangt, mit einem besonderen Reibbelag zu versehen, um hierdurch den Reibschluß an dieser Kupplungsstufe zwischen den genannten beiden Elementen optimal zu gestalten.

Nach dem vorstehend gesagten sind mit dieser Anordnung grundsätzlich zwei unterschiedliche Drehmomentübertragungen möglich. Die Stufe 1 des zweistufigen Schaltgetriebes überträgt das Drehmoment von dem Vorgelege über die Doppelriemenanordnung und damit die geringere Umlaufgeschwindigkeit bei höherem Drehmoment, z.B. bei erregtem Elektromagneten. Die Ankerscheibe ist über eine Verzahnung form- und kraftschlüssig mit der Mitnehmerhülse der Spindel verbunden und auf dieser axial verschiebbar gelagert. Gegen die Wirkung bzw. die Vorspannkraft der Tellerfeder drückt der Elektromagnet die Ankerscheibe mit vorgebbarem Kraftschluß auf den Reibbelag der Riemenscheibe des Schaltgetriebes. Der Magnetfluß des Elektromagneten läuft durch die Riemenscheibe bzw. den die Riemenscheibe bildenden ferromagnetischen Körper (Weicheisenkern) und wird über die Ankerscheibe geschlossen.

In der Ausführungsform nach Fig. 5, ist die Tellerfeder durch einen Permanentmagneten ersetzt, dessen Wirkung der in der Richtung einseitig vorgespannten Tellerfeder insofern entspricht. Bei der Übertragung des Drehmomentes vom Vorgelege auf die zweite Stufe des Schaltgetriebes, ist die Kuppelfunktion der Getriebeschaltkupplung so, daß der Riemen 5′ auf die obere Abtriebsriemenscheibe wirkt, das heißt, die Spindel über den schnelleren Antrieb und mit geringerem Drehmoment betätigt wird. Auch hier sind wiederum die Funktionen gemäß Ausführungsform nach Fig. 4 zu unterscheiden. In der Ausführungsform von Fig. 5 wird bei ausgeschaltetem Elektromagneten die Ankerscheibe von dem Permanentmagneten angezogen und ein Reibschluß zwischen der betriebsseitigen Riemenscheibe der Getriebestufe 1 vorgegeben.

Wie Fig. 5 im einzelnen zeigt, entspricht ansonsten der Aufbau dieses Zweistufengetriebes mit Dauermagneten im wesentlichen demjenigen mit Tellerfeder. Die Riemenscheibe 21 gemäß Ausführungsform von Fig. 4 ist hier durch die Riemenscheibe 31 dargestellt, in deren radiale flanschartige Erweiterung im Bereich oberhalb der Ankerscheibe 24 ein Dauer- bzw. Permanentmagnet 34 eingefügt ist, der die Funktion der Tellerfeder nach dem vorbeschriebenen Ausführungsbeispiel übernimmt. In nicht erregtem Zustand des Elektromagneten steht über den Weicheisenkern der Riemenscheibe 31 infolge der Wirkung des Dauermagneten 34 die radial äußere Stirnfläche der Riemenscheibe, die als Reibfläche 32 ausgebildet ist, in Reibeingriff mit der Ankerscheibe 24 oberhalb der Reibfläche 33, der Kupplungsscheibe 27 die außer Eingriff sind. Umgekehrt sind dann wiederum die Verhältnisse, wenn der Elektromagnet 28 erregt wird.

Die Verwendung einer solchen Kupplung zusammen mit einem Riemenscheiben-Getriebe ergibt einen wesentlich geringeren Geräuschpegel gegenüber den bisher bekannten Ausführungsformen, bei denen durch das Ineinandergreifen einer Mehrzahl von Zahnrädern entsprechende Geräusch nicht zu vermeiden sind und darüber hinaus auch zusätzlich Energie verloren geht, die in Wärme umgewandelt wird.

Wesentlich bei beiden Ausführungsformen nach Fig. 4 und Fig. 5 ist, daß jeweils nur eine der Kupplungshälften mit einem Elektromagneten versehen ist, während die andere Kupplungshälfte ohne Elektromagnet auskommt, wofür einmal eine einseitig vorgespannte Tellerfeder und zum anderen ein Permanentmagnet Anwendung findet. Bei der Ausführungsform der Verwendung einer Tellerfeder, zieht der als Anker ausgebildete Grundkörper 20 des Elektromagneten, unter Überwindung der Federkraft die zweite Kupplungshälfte an.

Durch die Verwendung eines einzigen Elektromagneten in nur einer Kupplungshälfte verringert sich nicht nur die Bauhöhe der Anordnung erheblich, sondern es minimieren sich auch die Kosten für die Kupplung selbst. Tellerfedern der hier eingesetzten Art oder auch die verwendeten Permanentmagnetringe sind kaum störanfällig und in jedem Fall leicht montierbar.

Die Ausführungsform nach Fig. 6 ist eine weiter modifizierte Ausführungsform, da hier der Antrieb der Spindel vom Hauptantriebsmotor 1 über nur eine Zwischenwelle geführt ist, die das Kegelscheibenpaar 2' und das Vorgelege 6 aus Fig. 1 in sich vereinigt.

Aus den Figuren 6, 7 und 9 sind Aufbau und Funktionsweise des Vorschubmechanismus für die Pinole 9 im einzelnen erkennbar. Demnach ist die die Spindel 8 aufnehmende Pinole 9 über eine Mitnnehmermutter 43 und den Träger 78 mit einem Kugelgewindetrieb verbunden, der seinerseits aus der Kugelgewindespindel 57 mit der Kugelgewindemutter 58 und der Lagereinheit 75 besteht, die an der Bohrkopfplatine 4 befestigt ist. Die Kugelgewindespindel 57 liegt im dichten Abstand parallel zur Pinole 9 und damit zu der Bohrspindel 8, bzw. der Vielkeilwelle 30. Die Lagereinheit 75 weist eine Buchse 76 auf, in der eine Zahnriemenscheibe 77 gelagert ist, die drehfest mit der Kugelgewindespindel verbunden über ein Übertragungselement 54, vorzugsweise einen Zahnriemen, auf das Ausgangsritzel eines Vorschubmotors 38 führt. Der Vorschubmotor 38 ist vorzugsweise ein Schrittmotor.

Wie aus den Darstellungen ersichtlich, ist die Pinole 9 innerhalb des Gehäuses bzw. der Bohrkopfplatine 4 gelagert und nimmt in diesem Bereich auch das Spindellager 48 auf, wobei eine Lagermutter 74 die Einheit nach unten abschließt.

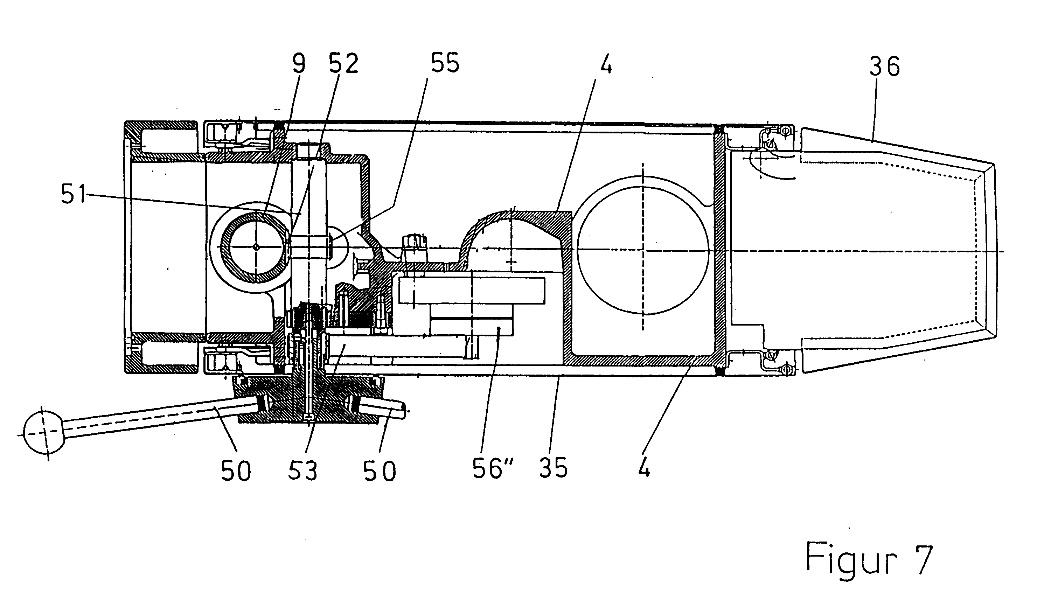

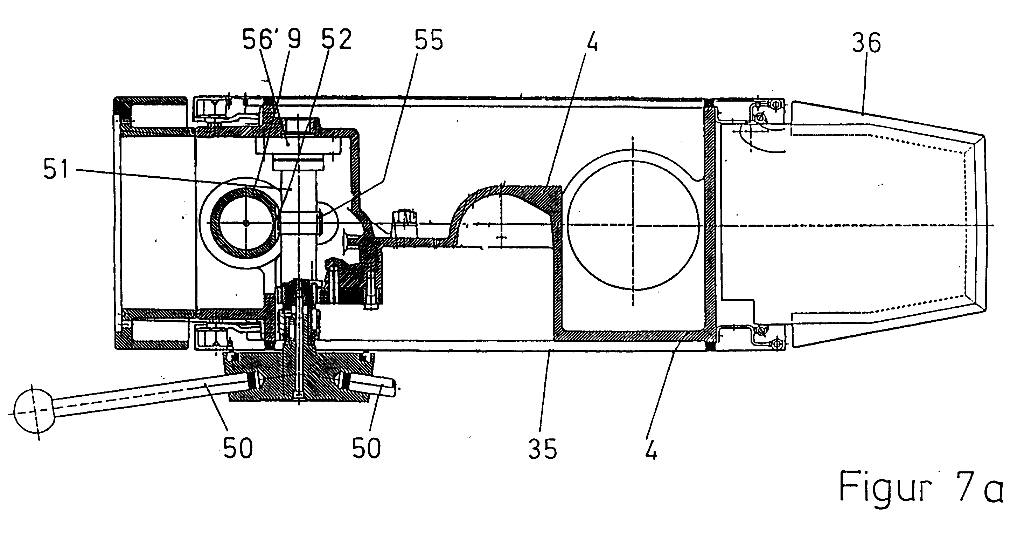

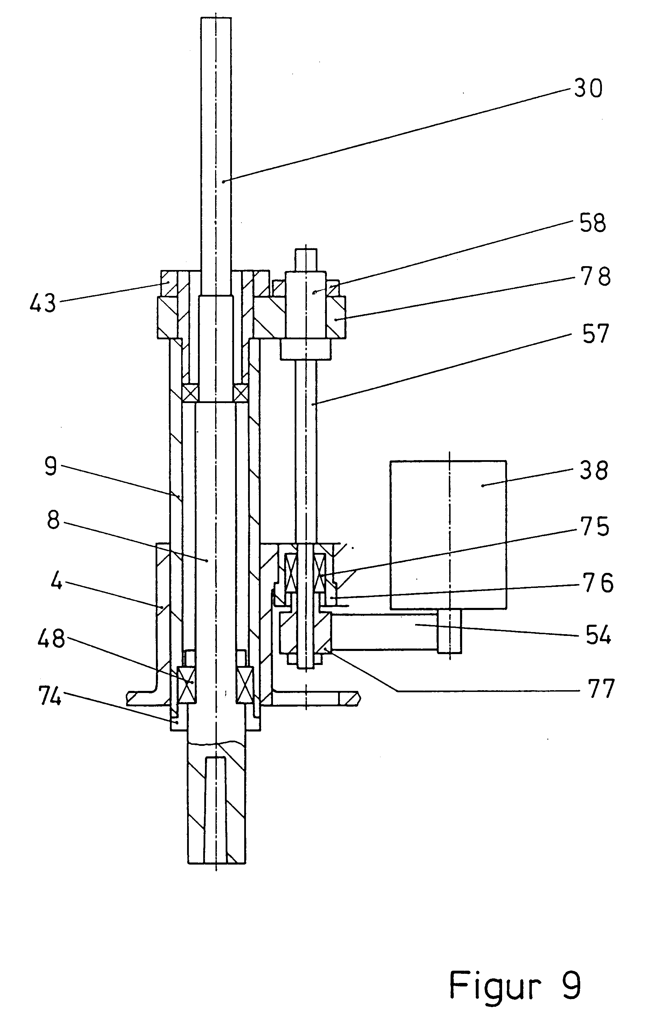

Dieser, wie vorstehend aufgebaute Vorschubmechanismus gemäß Fig. 6 und 9,ersetzt den von Hand angetriebenen Vorschubmechanismus mit Griffkreuz gemäß Fig. 7, bei dem mittels einer Vorschubwelle 51 deren Verzahnung in Eingriff mit einer Verzahnung 52 auf der Pinole 9 steht, die Pinole mit dem Werkzeug in Aufwärts- bzw. Abwärtsrichtung. Hierfür ist eine automatisch einschaltbare Haltbremse (56) mit der Vorschubwelle 51 direkt (56′), oder indirekt (56˝) unter Zwischenschaltung eines übertragungsgliedes, nämlich eines Zahnriemens 53 verbunden. Über eine nicht näher dargestellte Steuerung kann bei Erreichen einer voreingestellten Bohrtiefe der Vorschub blockiert werden. Im Gegensatz zu der bekannten Vorschubblockierung mittels mechanischem Anschlag, bei dem mit jedem Anschlag der eingestellte Vorschub, wenn auch nur geringfügig, verstellt wird, ist hier eine verstellfreie, beliebige Wiederholung einer einmal eingestellten Bohrtiefe sichergestellt.

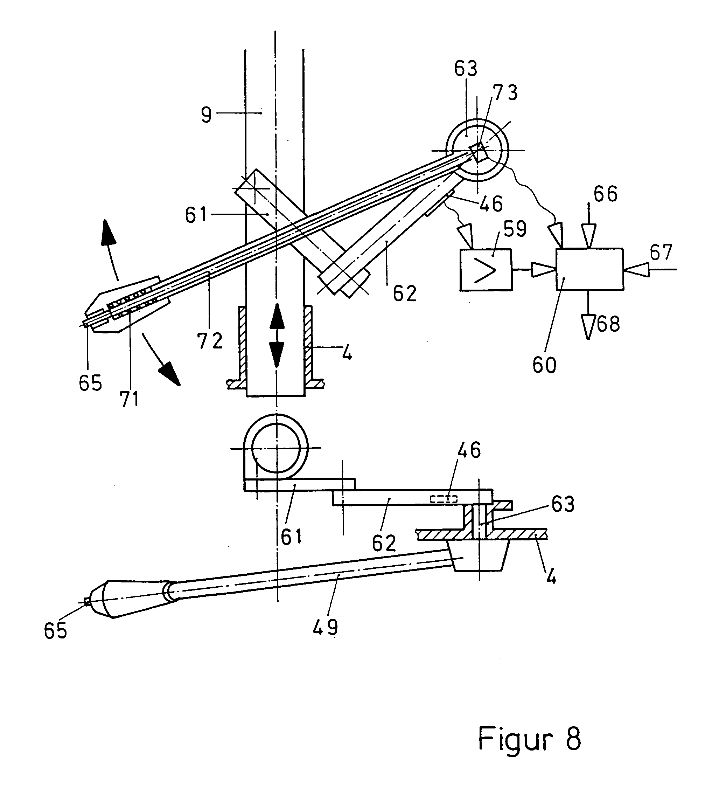

Fig. 8 zeigt einen vergleichbaren Servoantrieb mittels eines Handvorschubhebels 49 der über ein Gebriebe, nämlich ein Gebtriebegestänge, bestehend aus einem Koppelglied 61, einem Biegebalken 62 und einer Vorschubhebelwelle 63 auf die Pinole 9 wirkt. Die gewünschte Auf- und/oder Abbewegung der Pinole 9 erfolgt auch hier nicht hinsichtlich der dafür benötigten Kraftübertragung über den Handvorschubhebel 49, sondern direkt über den motorischen Vorschubantrieb, der seinerseits jedoch proportional zur Vorschubhebelbewegung gesteuert wird, wofür auf dem Biegebalken 62 mit einem Verformungssensor 46 beaufschlagt ist. Der Verformungssensor ist auf dem Biegebalken 62 in der Nähe des größten Biegemomentes in Form eines Dehnmeßstreifens aufgebracht. In Abhängigkeit der Dehnung wird ein Meßsignal einem Verstärker 59 zugführt und in einem nachgeschalteten Rechner 60 mit der Vorschubgeschwindigkeit der Pinole 9, das heißt dem die Pinole bewegenden Vorschub antriebsmotor 38 verglichen und so dem Motor 38 proportional zur Handkraft an dem Handvorschubhebel 49 die zugehörige Drehzahl vermittelt. Der Rechner 60 besitzt darüber hinaus einen Eingang 66 für die Rückmeldung der Antriebsvorrichtung und einen Eingang 67 für eine Eingabetastatur sowie einen Ausgang 68 für eine Display-Anzeige. Mittels eines Tastknopfes 65, der mit einer Vorspannung über eine Rückstellfeder 71 beaufschlagt ist und einen zugehörigen Stössel 72 innerhalb des Handvorschubhebels 49 läßt sich ein Taster 73 so betätigen, daS bei Erreichen einer bestimmten Bohrtiefe diese als Recheninformation im Rechner 60 gespeichert werden kann, um hier beliebig oft abgerufen werden zu können. Selbstverständlich ist es auch möglich den Tastknopf 65 nicht in den Handvorschubhebel 49 zu integrieren sondern an einer beliebigen anderen Maschinenstelle, beispielsweise im Bereich des Informations-Displays.

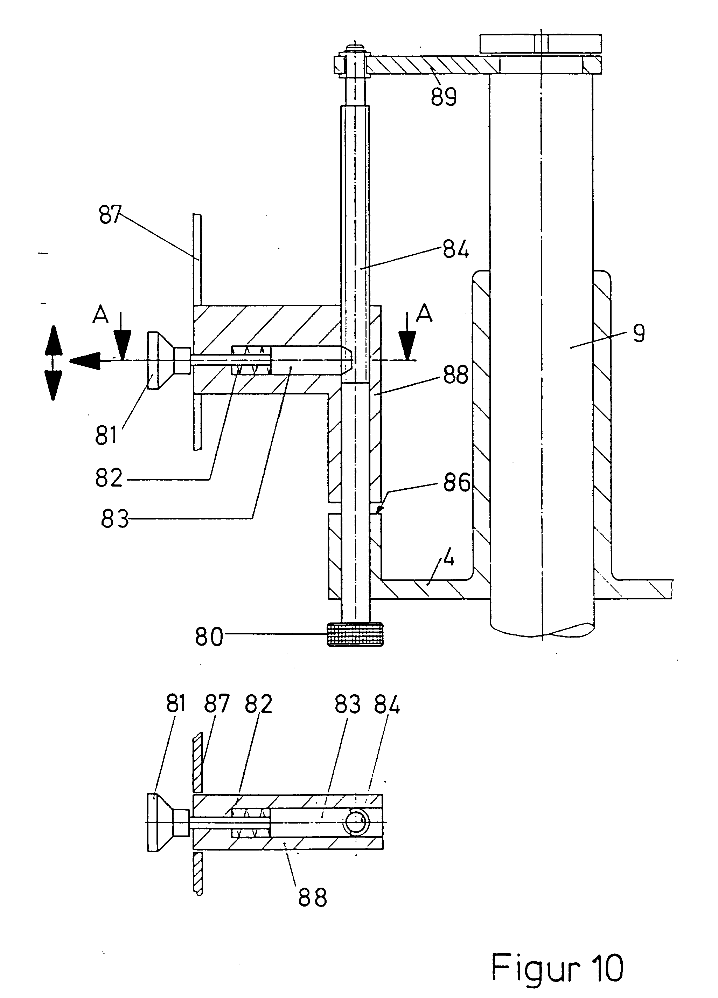

Fig. 10 zeigt für eine nichtrechnergesteuerte Maschine eine einfache Ausführungsform eines mechanischen Tiefenanschlages für die gewünschte Bohrtiefe. Im Seitenaufriß und in einem waagerechten Schnitt in Richtung der Pfeile A―A. Bei dieser Ausführungsform ist die im Gehäuseteil 4 geführte Pinole 9 über einen Verbindungsträger 89 mit einer Gewindespindel 84 verbunden, die wiederum im dichten -stand und parallel zur Pinole 9 angeordnet ist und durch das tragende Gehäuse bzw. die entsprechende Platine 4 hindurchgeführt ist. Das aus dem Bohrkopfgehäuse vorstehende Teil der Gewindespindel ist mit einem Rändelgriff 80 zur manuellen Betätigung versehen. Die Spindel 84 ist frei drehbar in Verbindungsträger 89 gelagert und hierfür desweiteren in einer Führungshülse 88 geführt, die bis auf die Anschlagfläche 86 abgesenkt werden kann. Hierfür wird ein Riegel 83, der mittels einer Feder 82 in Richtung auf das Gewinde der Spindel 84 zu vorgespannt ist, mittels eines Griffes 81 in der dargestellten Pfeilrichtung herausgezogen und damit die Führungshülse 88 entriegelt, so daß nunmehr der Griff 81 in einer schlitzförmigen Längsführung der Fronttafel 87 in die jeweils gewünschte Anschlagstellung gebracht werden kann. Dort wird dann mittels des Riegels 83 die Führungshülse 88 verriegelt und es wird eine Feineinstellung bezüglich eines an der Fronttafel angebrachten Linearmaßes über den Rändelgriff 80 vorgenommen. Die Linearskala ist in Fig. 11 rechts dargestellt.

## Patentansprüche

1. Antriebsanordnung für Werkzeugmaschinen mit einer Spindel (8) zur spanabhebenden Bearbeitung von Werkstücken, insbesondere bei Säulenbohrmaschinen, mit einem Hauptantriebsmotor (1), einem aus Kegelscheibensätzen (2, 15) bestehenden stufenlosen Keilriemenregeltrieb, bei der die Regelscheibenverstellung für wenigstens einen Kegelscheibensatz (15) des Keilriemenregeltriebes über einen Servo-Stellmotor (18) regelbar ist, einer Getriebekupplung (7), einem mehrstufigen Schaltgetriebe sowie einem Vorschubgetriebe für die die Spindel (8) aufnehmende Pinole (9) oder dergleichen Vorrichtung,
dadurch **gekennzeichnet,**
daß die Betätigungsverbindung zwischen dem Servo-Stellmotor (18) und dem Kegelscheibensatz (15) über eine Glocke (11) vorgegeben ist, die bei Verdrehung aufgrund einer axial und verdrehsicher in einer der Kegelscheiben (15) gelagerten Gewindespindel (12) eine axiale Verschiebung der anderen Kegelscheibe ermöglicht und der Servomotor (18) zwischen zwei Kegelscheibensätzen (15, 15') angeordnet ist.

2. Vorrichtung nach Anspruch 1,
dadurch gekennzeichnet, daß der Servomotor (18) parallel zu den Achsen der Kegelscheibensätze (15, 15') angeordnet ist.

3. Vorrichtung nach Anspruch 1,
dadurch gekennzeichnet, daß eine zweistufige Getriebekupplung (7) vorgesehen ist, deren eine Kupplungshälfte eine Vorspannung in der anderen Kupplungshälfte mittels eines Permanentmagneten (34) vorgibt.

4. Vorrichtung nach Anspruch 1,
dadurch gekennzeichnet, daß für die zweistufige Getriebekupplung (7) eine Tellerfeder (25) als Vorspannelement in der einen Kupplungshälfte vorgesehen ist.

5. Vorrichtung nach Anspruch 1,
dadurch gekennzeichnet, daß wenigstens ein Kegelscheibensatz (15, 15') das Vorgelege (6) und die Getriebekupplung (7) auf der oberen Abschlußplatte einer den Bohrkopf bildenden innentragenden Bohrkopf-Platine (4) gelagert ist.

6. Vorrichtung nach Anspruch 1,
dadurch gekennzeichnet, daß der elektromotorische Vorschubantrieb ein Schrittmotor (38) ist.

7. Vorrichtung nach wenigstens einem der Ansprüche 1 bis 6,
dadurch gekennzeichnet, daß wenigstens einer der Antriebsriemen ein Rundschnurriemen (13) ist.

8. Vorrichtung nach Anspruch 1, 3 und 4,
dadurch gekennzeichnet, daß die Ankerscheibe (24) der Getriebekupplung (7) am Umfang mit geeigneten Rastermarkierungen für den Abgriff von Drehzahlimpulsen (Drehzahlmessung) beaufschlagt ist.

9. Vorrichtung nach wenigstens einem der vorstehenden Ansprüche mit manuell betätigbarem Spindelvorschub,
dadurch gekennzeichnet, daß eine automatisch einschaltbare Haltebremse (56) mit der Vorschubwelle (51) direkt (56') oder indirekt (56'') über ein Übertragungselement (54) verbunden ist, wobei das Zahnrad (55) - wie an sich bekannt - drehfest auf der verzahnten Vorschubwelle (51) sitzt, die ihrerseits in der Verzahnung (52) der Pinole (9) kämmt.

10. Vorrichtung nach Anspruch 1,
dadurch gekennzeichnet, daß die aus einer Motor-Getriebeanordnung bestehende Vorschubeinrichtung für die die Spindel (8) aufnehmende Pinole (9) einen parallel zur Pinole (9) angeordneten Kugelgewindetrieb (57, 58) aufweist, der die motorische Bewegung des Vorschubmotors (38) über einen Mitnehmer (43) in einelineare Bewegung der Pinole (9) überträgt.

11. Vorrichtung nach wenigstens einem der Ansprüche 1 bis 10,
dadurch gekennzeichnet, daß der Handvorschubhebel (49) bzw. das Griffkreuz (50) für den Pinolenvorschub als Servohebel (-kreuz) ausgebildet ist, wobei ein die Kraftübertragung aufnehmendes Element (62 bzw. 51) mit einem Verformungssensor (46) beaufschlagt ist.

12. Vorrichtung nach Anspruch 11,
dadurch gekennzeichnet, daß für die Kraftübertragung zwischen Pinole (9) und Handhebel (49) ein Gestängegetriebe (61, 62, 63) vorgesehen ist.

13. Vorrichtung nach Anspruch 12,
dadurch gekennzeichnet, daß ein Gestängeteil als Biegebalken (62) ausgebildet ist, und daß der Verformungssensor (46) in der Nähe des größten Biegemoments befestigt und ein Dehnungs-Meßstreifen ist.

14. Vorrichtung nach einem der Ansprüche 11 bis 13,
dadurch gekennzeichnet, daß einem Rechner (60) über einen Verstärker (59) das übertragene Signal des Verformungssensors (46) zugeführt wird, der dieses mit der Vorschubgeschwindigkeit der Pinole (9) vergleicht und den Vorschubmotor (38) proportional zur Handkraft am Vorschubhhebel (62, 49) betätigt.

15. Vorrichtung nach Anspruche 11 bis 14,
dadurch gekennzeichnet, daß der Vorschubhebel (49) bzw. das Griffkreuz (50) einen Tastknopf (65) aufweist, über den der Rechner (60) seine jeweilige Stellung und damit diejenige der Pinole (9) speichert.

16. Vorrichtung nach Anspruch 15,
dadurch gekennzeichnet, daß der Tastknopf (65) innerhalb eines Bedienungsfeldes angeordnet ist, über das unterschiedliche Maschinenfunktionen eingebbar und steuerbar sind.

17. Vorrichtung nach einem der vorgenannten Ansprüche,
dadurch gekennzheichnet, daß eine Beleuchtungseinrichtung (64, 69) für Werkstück und Werkzeug im Maschinenkopf vor der Pinole (9) vorgesehen ist.

18. Vorrichtung nach wenigstens einem der vorstehenden Ansprüche,
dadurch gekennzeichnet, daß die den Hauptantrieb kopfseitig aufnehmende Platinenstruktur(4) die Gesamtheit der mechanischen Bauteile und die elektrischen Bauteile im Bohrkopf übergreifend trägt.

19. Vorrichtung nach Anspruch 5 und 18,
dadurch gekennzeichnet, daß die Bohrkopfplatine (4) aus einer Gußstruktur besteht, die wenigstens über Teile ihres Querschnittprofils annähernd einem Doppel-T-Träger entspricht.

## Claims

1. Drive arrangement for machine tools with a spindle (8) for machine processing of work-pieces, in particular for columnar drilling machines, comprising a main drive motor (1), a stepless V-belt control drive composed of sets of cone pulleys (2, 15) , wherein the cone-pulley adjustment for at least one set of cone pulleys (15) of the V-belt control drive is controlled via a servo-control motor (18) a gearing clutch (7), a multi-stage switch gearing as well as a thrust gearing for the quill (9) which receives the spindle (8) or other device of this type, **characterised in that** the operating link between the servo-control motor (18) and the set of cone pulleys (15) is provided via a bell (11) which on turning due to a threaded spindle (12), which is axially and non-rotationally mounted in one of the cone pulleys (15), permits an axial displacement of the other cone pulley, and that the servo-motor (18) is arranged between two sets of cone pulleys (15, 15').

2. Device according to claim 1, **characterised in that** the servo-motor (18) is arranged parallel to the axes of the sets of cone pulleys (15, 15').

3. Device according to claim 1, **characterised in that** a two-step gearing clutch (7) is provided, the one clutch half of which provides a pre-tension in the other clutch half by means of a permanent magnet (34).

4. Device according to claim 1, **characterised in** that for the two-step gearing clutch (7) is provided a cup spring (25) as a pretensioning element in the one clutch half.

5. Device according to claim 1, **characterised in that** at least one set of cone pulleys (15, 15'), the back gear (6) and the gearing clutch (7) are mounted on the top sealing plate of an internally carrying drillhead plate bar (4) which forms the drillhead.

6. Device according to claim 1, **characterised in that** the thrust drive, which is driven by an electric motor, is a stepped motor (38).

7. Device according to at least one of claims 1 to 6, **characterised in that** at least one of the drive belts is a round-cord belt (13).

8. Device according to claim 1, 3 and 4, **characterised in that** the anchor plate (24) of the gearing clutch (7) is peripherally provided with suitable raster markings for the pickup of torque pulses (speed measuring).

9. Device according to at least one of the above claims with manually operated spindle thrust, **characterised in that** an automatically applied holding brake (56) is connected to the thrust shaft (51) either directly (56') or indirectly (56'') via a transfer element (54), and that the toothed wheel (55) is in a conventional manner non-rotationally seated on the toothed thrust shaft (51) which itself meshes toothing (52) of the quill (9).

10. Device according to claim 1, **characterised in that** the thrust mechanism, having a motor-gearing arrangement, for the spindle-receiving (8) quill (9) comprises a cupola-thread drive (57, 58) which is arranged parallel with the quill (9) and which transfers the motor movement of the thrust motor (38) via a pickup (43) into a linear movement of the quill (9).

11. Device according to at least one of claims 1 to 10, **characterised in that** the manual thrust lever (49) or the cross grip (50) for the quill thrust is arranged as a servo lever (cross), in which respect an element (62 or 51) to accommodate the transfer of force is loaded by a deformation sensor (46).

12. Device according to claim 11, **characterised in that** a rod gearing (61, 62, 63) is provided for the transfer of force between quill (9) and hand lever (49).

13. Device according to claim 12, **characterised in that** a part of the rod is arranged as a flexible bar (62), and that the deformation sensor (46) is fixed near the largest flexural moment and that it is an expansion measuring strip.

14. Device according to one of claims 11 to 13, **characterised in that** a computer (60) is fed the transmitted signal of the deformation sensor (46) via an amplifier (59), and that it compares said signal to the thrust speed of the quill (9) and operates the thrust motor (38) proportionally to the manual force on the thrust lever (62, 49).

15. Device according to claims 11 to 14, **characterised in that** the thrust lever (49) or the grip cross (50) comprises a probe key (65), by means of which the computer (60) stores its respective position and thus that of the quill (9).

16. Device according to claim 15, **characterised in that** the probe key (65) is arranged within an operating field through which different machine functions can be entered and controlled.

17. Device according to one of the above claims, **characterised in that** an illumination means (64, 69) for the workpiece and the tool is provided in the machine in front of the quill (9).

18. Device according to at least one of the above claims, **characterised in that** the plate-bar structure (4), which accommodates the main drive at the head, carries and encompasses the entirety of mechanical components and the electric components in the drillhead.

19. Device according to claim 5 and 18, **characterised in that** the drillhead plate bar (4) is a cast structure which, at least over some of its cross-sectional profile, virtually corresponds with a double-T-support.

## Revendications

1. Dispositif d'entraînement pour machines-outil comprenant une broche (8) pour travailler des pièces par usinage, en particulier pour perceuses à colonnes comportant un moteur d'entraînement principal (1), un entraînement à vitesse infiniment réglable par courroie trapézoïdale consistant en des jeux de poulies à gorge (2, 15), dans lequel au moins un jeu de poulies à gorge trapézoïdale (15) du dispositif à vitesse réglable par courroie trapézoïdale est réglable au moyen d'un servo-moteur (18), un dispositif d'accouplement (7), un commutateur mécanique de vitesse à multi-positions ainsi qu'un mécanisme d'avance pour la douille (9) ou un dispositif analogue, recevant la broche (8), caractérisé en ce que la liaison d'actionnement entre le servo-moteur (18) et le jeu de poulies à gorge (15) est réalisé par une pièce cloche (11) qui, lors de la rotation dans l'une des poulies à gorge (15) d'une broche filetée (12) qui y est disposé axialement et fixe en rotation entraîne un déplacement axial de l'autre poulie à gorge et en ce que le servo-moteur (18) est disposé entre deux jeux de poulies à gorge trapézoïdale (15, 15').

2. Dispositif selon la revendication 1, caractérisé en ce que le servo-moteur (18) est disposé parallèlement aux axes des jeux de poulies à gorges trapézoïdales (15, 15').

3. Dispositif selon la revendication 1, caractérisé en ce qu'il est prévu un dispositif d'accouplement (7) à deux positions de vitesse dont l'un des demi-accouplements produit une pré-contrainte dans l'autre demi-accouplement au moyen d'un aimant permanent (34).

4. Dispositif selon la revendication 1, caractérisé en ce qu'une rondelle ressort Belleville (25) est prévue comme élément de précontrainte dans l'un des demi-accouplements du dispositif d'accouplement (7) à deux positions de vitesse.

5. Dispositif selon la revendication 1, caractérisé en ce qu'au moins un jeu de poulies trapézoïdales (15, 15'), le renvoi (6) et le dispositif d'accouplement (7) sont disposés sur la plaque de fermeture supérieure d'un boîtier (4) formant tête de perceuse portant intérieurement la platine de la tête de perceuse.

6. Dispositif selon la revendication 1, caractérisé en ce que le moteur électrique d'avance est un moteur pas-à-pas (38).

7. Dispositif selon l'une au moins des revendications 1 à 6, caractérisé en ce qu'au moins l'une des courroies d'entraînement est une courroie ronde (13).

8. Dispositif selon les revendications 1, 3 et 4, caractérisé en ce que le disque d'armature (24) du dispositif d'accouplement (7) est pourvu sur sa périphérie de crans apropriés pour la détection d'impulsion de vitesse de rotation (mesure de la vitesse de rotation).

9. Dispositif selon l'une au moins des revendications qui précèdent comportant une broche d'avance actionnable manuellement, caractérisé en ce qu'un frein d'arrêt (56), enclenchable automatiquement est relié directement (56') ou indirectement (56'') par l'intermédiaire d'un élément de liaison (54) à l'axe d'avance (51), le pignon denté (55) -comme cela est bien connu- étant disposé non tournant sur l'axe d'avance (51) denté qui lui-même engrenne avec la denture (52) de la douille (9).

10. Dispositif selon la revendication 1, caractérisé en ce que le dispositif d'avance constitué par un mécanisme motorisé pour la douille (9) recevant la broche (8) présente un mécanisme à bille (57, 58) disposé parallèlement à la douille (9) qui transforme le mouvement motorisé du moteur d'avance (38) en un mouvement linéaire de la douille (9) par l'intermédiaire d'un entraîneur (43).

11. Dispositif selon l'une au moins des revendications 1 à 10, caractérisé en ce que le levier manuel d'avance (49), c'est-à-dire la croix de manoeuvre (50) pour l'avance de la douille, est constitué par un servo-levier (croix), l'un des éléments (62 ou 51) assurant la transmission de l'effort étant muni d'un détecteur de déformation (46).

12. Dispositif selon la revendication 11, caractérisé en ce qu'entre la douille (9) et le levier manuel (49) il est prévu un mécanisme à tringlerie (61, 62, 63) pour la transmission de l'effort.

13. Dispositif selon la revendication 12, caractérisé en ce qu'une pièce de la tringlerie constitue une barre de flexion et en ce que le détecteur de déformation (46) est fixé à proximité du moment fléchissant le plus grand et est constitué par une gorge de contrainte mesurant l'allongement.

14. Dispositif selon l'une quelconque des revendications 11 à 13, caractérisé en ce que le signal provenant du détecteur de déformation (46) est transmis par l'intermédiaire d'un amplificateur (59) à un ordinateur (60) qui compare celui-ci à la vitesse d'avance de la douille (9) et actionne le moteur d'avance (38) proportionnellement à l'effort manuel exercé sur le levier d'avance (62, 49).

15. Dispositif selon les revendications 11 à 14, caractérisé en ce que le levier d'avance (49) c'est-à-dire la croix de manoeuvre (50) présente un bouton poussoir (65) à l'aide duquel l'ordinateur (76) peut enregistrer sa position respective et donc celle de la douille (9).

16. Dispositif selon la revendication 15, caractérisé en ce que le bouton poussoir (65) est disposé sur un tableau de commande, à l'aide duquel différentes fonctions de la machine peuvent être enregistrées et commandées.

17. Dispositif selon l'une des revendications qui précèdent, caractérisé en ce qu'une installation d'éclairage (64, 69) pour la pièce usinée et l'outil est prévu dans la tête de machine devant la douille (9).

18. Dispositif selon l'une au moins des revendications qui précèdent, caractérisé en ce que la structure à platine (4) recevant du côté de la tête le dispositif d'entraînement principal porte et incorpore l'ensemble des composants mécaniques et des composants électriques de la tête de perçage.

19. Dispositif selon les revendications 5 et 18, caractérisé en ce que la platine de la tête de perçage (4) est constituée par une structure en fonte qui correspond au moins dans des parties du profil de sa section à un support ayant approximativement la forme d'un double T.
